# DEMANDE DE BREVET EUROPEEN

(11) **EP 2 226 966 A1**
(43) Date de publication de la demande: **08.09.2010**
(21) Numéro de dépôt: 09305196.9
(22) Date de dépôt: 03.03.2009
(51) Int. Cl.: H04L 9/32, G06Q 40/00, G06Q 20/00, G06F 21/00

(54) **Procédé d'établissement sécurisé d'un contrat multipartite virtuel matérialisable**

(71) Demandeur: Gemalto SA, 92190 Meudon (FR)
(72) Inventeur: Mouille, Stéphane, 13420, GEMENOS (FR)

(57) **Abrégé**

L'invention est un procédé d'établissement sécurisé d'un contrat multipartite, basé sur l'utilisation de certificats numérique et de dispositifs électroniques.

Ce procédé comprend au moins 3 étapes : la signature, la contresignature, et le formatage.

Le document formaté à la particularité d'être matérialisable.

## Description

L'invention concerne Procédé d'établissement sécurisé d'un contrat multipartite virtuel matérialisable.

L'invention porte en particulier sur le domaine de la signature électronique de document.

l'accroissement général des transactions, commerciales ou non, va de pair avec une augmentation considérable du nombre de contrats. Le terme du contrat s'entend ici comme : « document entérinant l'acceptation par au moins deux cosignataires, d'un objet défini ». Des exemples de contrats de la vie courante sont par exemple le contrat de vente qui engage le vendeur et l'acheteur sur l'objet de la vente, mais également le chèque qui engage un acheteur et un vendeur sur un paiement.

Les contrats peuvent lier plus de deux cosignataires, par exemple dans le cadre d'un contrat de créances, seront cosignataires l'acheteur, le vendeur, ainsi que la banque.

Ces contrats prendre deux formes différentes : une forme matérielle, ou bien une forme virtuelle.

Les contrats matériels sont historiquement rédigés sur un support physique, signé et contresigné généralement de manière manuscrite, est réalisé en un nombre d'exemplaire au moins égal au nombre de cosignataires. Chacun des cosignataires conservant une copie de ce contrat. Les avantages majeurs de ce type de contrats sont :
- leur lisibilité par l'être humain. En effet personne sachant lire la langue du contrat incapable d'en obtenir l'objet ainsi que l'identité des signataires. Il est également possible d'étudier les signatures apposées sur ce contrat.
- la maturité des moyens de traitement. En effet il existe à ce jour de très nombreux moyens permettant de traiter ces contrats. Ces moyens nécessitent généralement une saisie plus ou moins automatisée.

Ces contrats concernent cependant le défaut majeur qui est la valeur de leur signature. En effet une écriture manuscrite n'est pas aisément « vérifiable », les identités des signataires reposent généralement sur un contrôle visuel, réalisé par une personne physique, de papier d'identité. La grande diversité de documents d'identité en ce contrôle très difficile et risqué. En effet, chaque pays produit un grand nombre de document officiels, tels que le permis de conduire, la carte d'identité, le passeport ... De plus la libre circulation des personnes dans certaines zones géographiques de la planète (Europe ...), multiplie d'autant le nombre de document officiels.

Depuis la reconnaissance par bon nombre d'organismes gouvernementaux de la signature électronique, la quantité de contrats dits virtuels ne cesse de croître. Ces contrats ont un format généralement numérique auquel sont imposés des signatures électroniques.

La signature électronique, ou numérique, permet par exemple de garantir l'authenticité et l'intégrité des données, ainsi que l'identité du signataire. Si la confidentialité est requise, il faut chiffrer le contenu du message.

De façon générale, le chiffrement consiste à rendre le texte d'un message illisible pour qui ne détient pas la clé de déchiffrement. Dans les systèmes de chiffrement symétriques, une seule clé sert à la fois à chiffrer et à déchiffrer les données. Elle doit être gardée secrète par les parties intéressées pour que la sécurité de l'information soit garantie. L'inconvénient principal réside dans le fait que l'expéditeur et le destinataire doivent convenir à l'avance de la clé et doivent disposer d'un canal sûr pour l'échanger.

C'est pourquoi les systèmes de signature électronique qui se développent depuis quelques années reposent sur des algorithmes de chiffrement asymétriques, où, de plus, chaque utilisateur dispose de deux clés, une clé publique et une clé privée. Ces deux clés sont elles-mêmes créées à l'aide d'algorithmes mathématiques. Elles sont associées l'une à l'autre de façon unique et sont propres à un utilisateur donné. Un message chiffré à l'aide d'un algorithme asymétrique et d'une clé privée, qui constitue l'un des paramètres de l'algorithme, ne peut être déchiffré qu'avec la clé publique correspondante, et inversement. La clé publique doit donc être connue de tous, tandis que la clé privée reste secrète, la carte à puce semblant être le meilleur support de stockage des clés privées. Lorsque l'algorithme de chiffrement asymétrique est utilisé seulement pour créer la signature électronique, les mêmes clés, privée et publique, sont utilisées, mais seulement pour vérifier l'authenticité et l'intégrité du message.

Ces signatures électroniques, obtenues par l'application d'algorithmes asymétriques, sont parfois qualifiées de numériques ou de " digitales ", par opposition aux signatures électroniques créées au moyen d'autres dispositifs.

Selon la Commission des Nations Unies pour le droit commercial international, une signature numérique est " une valeur numérique apposée à un message de données et qui, grâce à une procédure mathématique bien connue associée à la clé cryptographique privée de l'expéditeur, permet de déterminer que cette valeur numérique a été créée à partir de la clé cryptographique privée de l'expéditeur. Les procédures mathématiques utilisées pour créer les signatures numériques sont fondées sur le chiffrement de la clé publique. Appliquées à un message de données, ces procédures mathématiques opèrent une transformation du message de telle sorte qu'une personne disposant du message initial et de la clé publique de l'expéditeur peut déterminer avec exactitude : a) si la transformation a été opérée à l'aide de la clé privée correspondant à celle de l'expéditeur ; et b) si le message initial a été altéré une fois sa transformation opérée (...) "

Contrairement à la signature manuscrite, la signature numérique, composée de chiffres, de lettres et d'autres signes, ne comporte aucun élément permettant de l'attribuer à une personne donnée. Chaque utilisateur doit donc établir avec certitude l'identité de ses correspondants. C'est pourquoi on recourt à des services de certification, souvent désignés comme "tiers de confiance", ou "tiers de certification", qui disposent de la confiance de chacun et qui garantissent l'appartenance d'une signature à une personne. Comme le destinataire utilise la clé publique de l'expéditeur pour vérifier la signature électronique de ce dernier, la vérification suppose que le tiers certifie au destinataire que la clé publique qu'il utilise correspond bien à la clé privée de l'expéditeur signataire et que ce dernier est bien celui qu'il prétend être. Les tiers de certification délivrent donc des certificats d'authentification qui contiennent, d'une part, divers renseignements sur la personne dont on souhaite vérifier l'identité (nom, prénom, date de naissance...) et, d'autre part, sa clé publique. Ces certificats sont généralement réunis dans des bases de données mises en ligne sur le réseau Internet, ce qui permet à chacun d'y accéder facilement.

La signature numérique constitue donc un bloc de données créé à l'aide d'une clé privée; la clé publique correspondante et le certificat permettent de vérifier que la signature provient réellement de la clé privée associée, qu'elle est bien celle de l'expéditeur et que le message n'a pas été altéré.

Ces solutions restent à ce jour très cloisonnées. La présente invention propose de réaliser un contrat apporte des garanties d'un contrat virtuel, mais en conservant la lisibilité et les moyens de traitement d'un contrat matériel.

Pour cela l'invention est, dans un premier temps, un procédé d'établissement sécurisé d'un contrat numérique entre, au moins un premier dispositif électronique communicant, un deuxième dispositif électronique communicant et un tiers de confiance, les premiers et deuxièmes dispositif électronique communicant possédant chacun au moins un couple clef privée clef publique, et un certificat d'authenticité au regard d'un algorithme asymétrique ASYM, le tiers de confiance possédant tout ou partie des informations publiques des dispositifs électroniques communicants.

Ce procédé comprend au moins les étapes de :
- signature, dans laquelle le premier dispositif électronique communicant signe, au moyens de sa clef privée et de l'algorithme asymétrique ASYM, tout ou partie d'un document numérique, et ajoute cette signature au document numérique dans un format lisible optiquement, pour produire un document signé
- contre-signature, dans lequel le deuxième dispositif électronique communicant signe, au moyens de sa clef privée et de l'algorithme asymétrique ASYM, tout ou partie du document signé, et ajoute cette signature au document signé dans un format lisible optiquement, pour produire un document contresigné
- édition, formatage du document contresigné dans un format imprimable assurant la lisibilité optique du contenu du document, ainsi que des deux signatures électroniques, indépendamment les uns des autres.

Dans un mode de réalisation, au cours de l'étape de signature, le premier dispositif électronique communicant calcule une valeur de sécurité, et l'ajoute au document électronique, avant de le signer.

Dans un autre mode de réalisation, au cours de l'étape de contre-signature, le deuxième dispositif électronique communicant calcule une valeur de sécurité, et l'ajoute au document signé, avant de le signer.

Ces valeurs de sécurité peuvent par exemple être des nombres aléatoires, ou bien une valeur fonction de la date.

Selon un mode de réalisation, préalablement à la signature du document numérique, le premier dispositif électronique communicant transmet tout ou partie des composantes publiques de son identité au tiers de confiance, qui vérifie cette identité et retourne une information qui entre dans le calcul de la valeur de sécurité.

Dans un autre mode de réalisation, préalablement à la contresignature du document signé, le second dispositif électronique communicant transmet tout ou partie des composantes publiques de son identité au tiers de confiance, qui vérifie cette identité et retourne une information qui entre dans le calcul de la valeur de sécurité.

Au cours de l'étape de signature, le premier dispositif électronique communicant peut modifier le document électronique. Cette modification peut par exemple consister en l'insertion, dans le document électronique, d'information contenues dans le premier dispositif électronique, ou bien en une suppression, dans le document électronique, de une ou plusieurs informations originales, en fonction d'information contenues dans le premier dispositif électronique.

Au cours de l'étape de contresignature, le deuxième dispositif électronique communicant peut modifier le document signé. Cette modification peut par exemple consister en l'insertion, dans le document signé, d'informations contenues dans le deuxième dispositif électronique, ou bien en une suppression, dans le document signé, de une ou plusieurs informations originales, en fonction d'information contenues dans le deuxième dispositif électronique.

Sur le document au format imprimable, les signatures électroniques peuvent, par exemple être inscrites sous forme numérique, ou bien sous la forme de code barres.

L'invention est également un procédé de traitement d'un contrat numérique entre, au moins un signataire, un contresignataire et un tiers de confiance, les signataires et contresignataires possédant chacun au moins un couple clef privée clef publique, et un certificat d'authenticité au regard d'un algorithme asymétrique ASYM, le tiers de confiance possédant tout ou partie des informations publiques des signataires et contresignataires, et un dispositif électronique, dit receveur.

Ce procédé comprend au moins les étapes de :
- réception, au cours de laquelle le receveur obtient un document numérique signé et contresigné,
- authentification du signataire, au cours de laquelle le receveur lit la contresignature présente sur le document, contacte le tiers de confiance afin d'obtenir la clef publique du contresignataire, et vérifie la corrélation entre la contresignature et la clef publique en utilisant l'algorithme asymétrique ASYM,
- authentification du contresignataire, au cours de laquelle le receveur lit la signature présente sur le document, contacte le tiers de confiance afin d'obtenir la clef publique du signataire, et vérifie la corrélation entre la contresignature et la clef publique en utilisant l'algorithme asymétrique ASYM,
- traitement, au cours de laquelle le contenu du document numérique est analysé.

D'autres caractéristiques et avantages de l'invention ressortiront clairement de la description qui en est faite ci-après, à titre indicatif et nullement limitatif, en référence aux dessins annexés dans lesquels :
- La figure 1 représente l'établissement d'un contrat entre deux acteurs,
- La figure 2 représente l'établissement d'un contrat « par contumace » entre 3 entités

La présente invention est particulièrement adaptée à un contexte multi utilisateur avec une entité centrale faisant office de tiers de confiance. Un gouvernement peut per exemple prendre cette casquette de tiers de confiance en assurant le déploiement d'un système de cryptographie à clef publique (dit PKI) au travers des documents d'identité électronique qu'il diffuse.

Un schéma plus large supra-gouvernemental est envisageable dans le cas ou un organisme assure ce rôle de tiers de confiance (par exemple OACI, Commission Européenne, Fédération Régionale d'Etat, ...) .

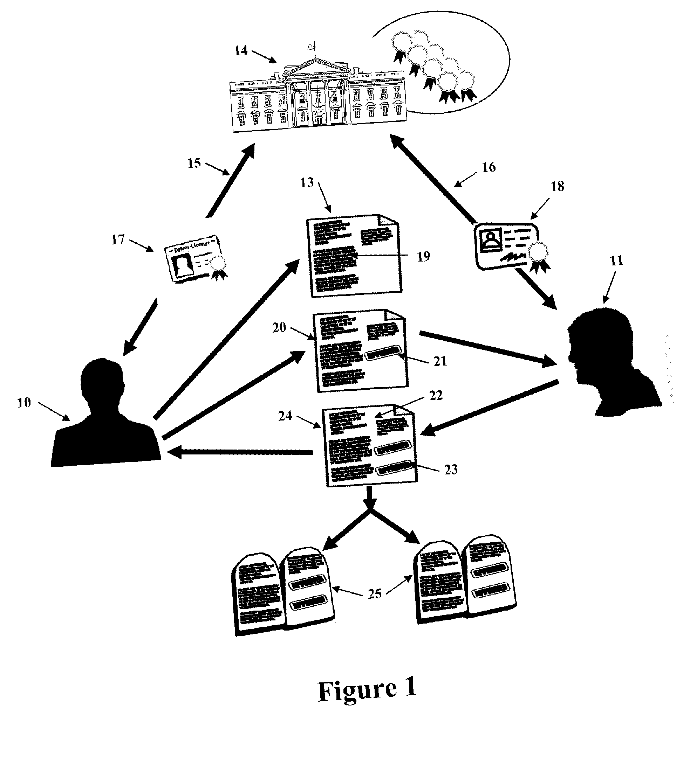

La figure 1 illustre l'établissement d'un contrat tripartite selon l'invention. En effet, ce mode de réalisation s'inscrit dans un contexte ou 2 utilisateurs, 10 et 11 établissent un contrat 13 dument signé, grâce à l'aide d'un tiers de confiance 14, ici représenté par une entité gouvernementale. Cette entité centrale est en charge de la gestion des clefs et certificats nécessaires à l'application des protocoles à clefs publiques. Les utilisateurs 10 et 11 sont liés à l'entité gouvernementale par des contrats respectifs 15 et 16. Ces contrats ne font pas parti de la présente invention, et ne sont donc pas décrits ici, mais ils garantissent les informations fournies par le tiers de confiance. Dans une implémentation nationale de l'invention avec une entité gouvernementale qui fait office de tiers de confiance, ces contrats 15 et 16 représentent par exemple la nationalité des utilisateurs 10 et 11. En effet, de par la nationalité des utilisateurs, un lien existe avec le gouvernement qui, en leur fournissant un document d'identité garanti leur identité en tant que résident national.

la solution décrite dans la figure 1, illustre le moins assuré dans lequel les deux cosignataires d'un contrat sont des personnes physiques en possession d'un document d'identité électronique 17 et 18. Chacun de ces documents électroniques contienne au moins un microprocesseur, une mémoire non volatile, une mémoire de travail, ainsi que des interfaces d'entrée/sortie. Ces documents, par exemple du type carte nationale d'identité électronique sans contact fournis par l'organisme gouvernemental 14, peuvent également être par exemple un permis de conduire, une carte de résident, une carte de séjour, une carte de santé, ou encore un passeport. Tout document délivré en accord avec l'organisme gouvernemental 14 est utilisable. Une contrainte est que ces documents doivent posséder des fonctionnalités électroniques leur permettant de stocker, et d'utiliser des fonctionnalités cryptographiques.

Si un document, par exemple parmi ceux cité ci-dessus ne possèdent pas ces fonctionnalités, il est possible de les leur fournir en leur associant, par exemple, un complément électronique de type étiquette électronique. Dans ces cas, c est le document résultant, composé du document passif et de l'ajout électronique qui sera formera les documents 17 ou 18.

Un cas particulier est représenté par les visas. Un visa est un document délivré par les autorités compétentes d'un pays qu'un étranger doit présenter lors de l'entrée sur le territoire d'un État dont il n'est pas le ressortissant. Pour être valide il doit généralement être solidarisé à un passeport.

Dans le cas ou le visa fournit les fonctionnalités électroniques nécessaires à l'implémentation de l'invention, les documents 17 et 18 peuvent être constitués d'un passeport associé à un visa électronique.

Lors de l'établissement d'un contrat 13, l'utilisateur 10 produit le corps digital 19 du contrat. Ce corps de contrat représente tout ou partie de l'objet du contrat. Cet objet peut être représenté par un texte, mais la digitale du contrat à cette étape permet d'accepter tout autre forme de document, par exemple vidéo ou audio.

Dans un mode préféré de réalisation, l'utilisateur 10 complète ledit corps digital 19 avec des données issues de son propre document d'identité électronique 17. Ces données sont par exemple un ensemble de données d'identification, et pourquoi pas d'information bancaires ou fiscales enregistrées en amont dans le document électronique 17.

Dans le cas ou le document 14 est, par exemple, un contrat de vente, le vendeur 10 fournit le descriptif 19 de l'objet de la vente, et insère également son identité et les coordonnées bancaires auxquelles devra être fait le paiement dans le corps 19.

A cette étape, il est envisageable que l'acheteur 11 ajoute à son tour des informations, par exemple sur son identité et ses coordonnées bancaires.

Dans le cas ou le corps 19 n'est pas textuel, l'objet de la vente peut être illustré au travers d'une vidéo, et les informations additionnelles par exemple fournies dans un fichier audio.

Le vendeur 10 va maintenant apposer numériquement sa signature 21 sur le document 19 pour produire un contrat signé 20. La signature est produite conformément aux algorithmes de cryptographie asymétrique ASYM de l'art antérieur, par exemple le RSA (pour Rivest Shamir Adleman), ou bien les algorithmes basés sur les courbes elliptiques.

Cette étape se fait généralement en envoyant le document 1 9 a u document électronique 17. Les calculs cryptographiques sont généralement réalisés à l'intérieur du document électronique afin de faire circuler les informations secrètes le moins possible, notamment la clef secrète.

Cette signature peut par exemple se faire en produisant un condensat du corps 19 du contrat grâce à une fonction de hachage, et en chiffrant ce haché grâce à la clef privée du vendeur 10 et un algorithme asymétrique, par exemple le RSA. Le produit de ce chiffrement peut former la signature 21 du document 19 par le vendeur 10.

Dans le mode de réalisation illustre par la figure 1, le document signé 20 contient le corps du contrat 19, sous une forme librement lisible, ainsi que la signature 21.

Un autre mode de réalisation est envisageable dans lequel l'opération de signature ne conserve pas le corps 19 sous une forme librement lisible, mais le chiffre afin d'en garantir la confidentialité.

Le vendeur 11 peut maintenant, s'il le souhaite, ajouter a son tour des informations au corps 19, et produit ainsi un nouveau corps 22. Les informations ajoutées sont, dans l'exemple actuel l'identité de l'acheteur, le montant de la transaction, et les coordonnées bancaires de l'acheteur.

L'acheteur va maintenant contresigner le document. Dans le cas ou l'acheteur 11 a créé un document 21 en ajoutant des informations, c'est ce document la qui va faire l'objet de la signature numérique. Si aucune information n'a été ajoutée, c est le corps 19 également signé par le vendeur 10 qui est signé.

Le calcule de la signature 23 de l'acheteur 11, se fait similairement à la production de la signature 21 du vendeur 10.

La signature 23 ainsi produite est ajoutée au document pour produire un document 24 contresigné.

Ce document doit être formaté afin de le produire sous un format matérialisable 25. La matérialisation la plus commune consiste en une impression.

Un format matérialisable est un format physique, et non plus digital ou numérique, qui ne soit pas duplicable.

Cette propriété de « duplicabilité » est un élément fort qui différencie un objet matériel d'un objet virtuel. En effet, un objet virtuel, ou digital, ou numérique, peut être dupliqué à l'infini sans altération, ni de la qualité de la copie, ni de l'original. C'est par exemple le cas d'un fichier informatique qui peut être transmis, à l'identique, à plusieurs destinataires sans pour autant altérer le fichier d'origine.

En revanche, un objet matériel peut être transmis mais à ce moment là le propriétaire originel ne le possède plus. Dans le cas de support d'information, il est toujours possible d'en faire des copies (par exemple photocopies, ou bien copie de cassettes audiophoniques) mais ce ne seront pas des copies à l'identique, et une itération des copies fait ressortir une altération non négligeable de la qualité des copies.

Les seules copies qui sont sans altération ni de la qualité de la copie ni du support sont les copies au sans reproduction, qui sont en fait la création d'un nouvel objet ressemblant au premier. Ce cas ne peut donc pas entrer en ligne de compte car justement nous sommes des lors face à deux objets matériels ayant des « vies » propres, avec chacun un auteur, une date de création ... distincts, mais avec des similitudes. Une analyse poussée d'une telle copie fera ressortir immanquablement des différences (par exemple la composition chimique des composants de 1 encre ou du support, la nature des impuretés présentes sur le support ...)

Le format de document 25 a, de plus, la particularité d'avoir les signatures 21 et 23 dans un format lisible optiquement. Cette lecture peut se faire par l'oeil humain, ou bien par tout autre moyen optique de capture. Dans un mode particulier de réalisation, les signatures peuvent être une succession de chiffres, voire un code-barres.

Le document ainsi produit peut désormais prendre l'une quelconques des deux voies possibles, à savoir un traitement automatisé, auquel cas le document reste sous une forme virtuelle, numérique, ou bien être matérialisé afin de subir un traitement classique.

Cette matérialisation peut avantageusement se faire au travers d'une impression. Dans un mode préféré de réalisation de l'invention, dans le document imprimé, le corps 14 sera conservé sous une forme lisible. Dans le cas ou le contenu du corps 14 n'es pas composé de texte mais d'informations autre, il est envisageable de convertir ces documents au format numérique, et de les transcrire sous la forme de données brutes. Ainsi un fichier vidéo peut être transcrit sous la forme d'une succession de caractères imprimables, comme le fait par exemple le format MIME (pour « Multipurpose Internet Mail Extensions » en anglais) qui converti tous les documents quel qu'ils soient qui sont associées à un courrier électronique sous la forme d'une suite de caractères imprimables afin de les transmettre dans de bonnes conditions.

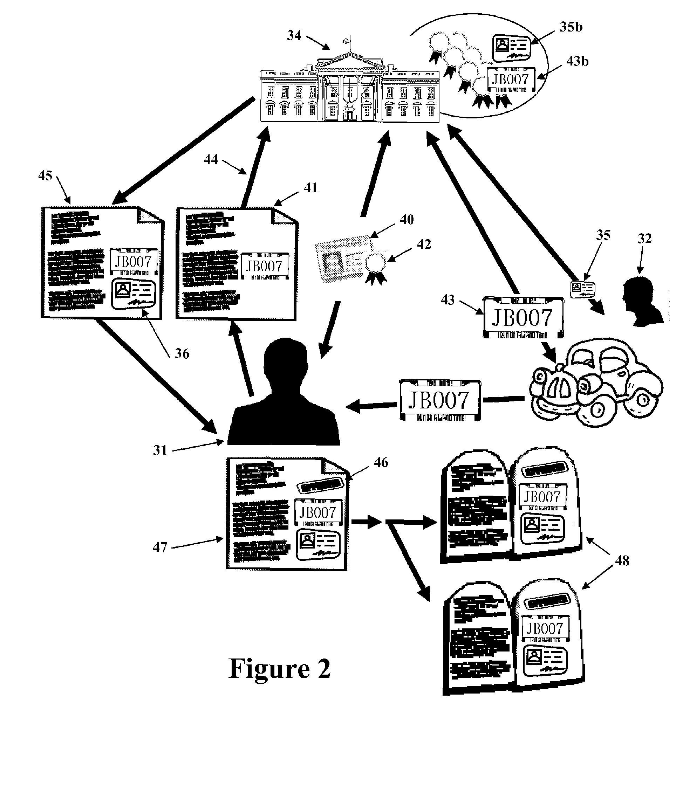

La figure 2 illustre un mode de réalisation de l'invention dans lequel le contrat 30 qui est réalisé prend en compte 3 acteurs 31 32 33, chacun sous contrat avec le tiers de confiance 34 ici illustré par une entité gouvernementale.

Ce mode d'implémentation présente le cas ou un représentant des forces de l'ordre 31 dresse une contravention à un usager 32 de la route car son véhicule 33 est garé sur un emplacement interdit.

Le représentant des forces de l'ordre 31 est en possession d'un document électronique 40 qui contient un ensemble d'information personnelles, professionnelles et cryptographiques, et qui a été émis pas l'entité gouvernementale 34 .Ce document électronique est par exemple une carte professionnelle munie d'un puce électronique.

Lors de la constatation de l'infraction, l'agent 31 est en face du véhicule 33, mais pas forcément de son, propriétaire 32. L'agent va donc prendre son terminal de communication 35, et initier la rédaction d'une contravention 41.

Dans ce mode de réalisation, l'agent présente sa carte électronique au terminal qui initie une communication radio fréquence avec la carte, et reçoit de sa part un certificat 42 sur l'identité de l'agent. Dès lors, le terminal se met en communication, grâce à un réseau de téléphonie mobile, avec un serveur appartenant à l'entité gouvernementale 34, et lui fournit le certificat. Si le certificat correspond bien à celui d'un agent en fonction, alors le terminal reçoit l'autorisation de poursuivre la procédure.

L'agent va choisir, sur son terminal, une matrice de contravention 41 en fonction de infraction constatée, ici stationnement interdit.

La carte 40 fournit les informations concernant l'agent, nécessaire à la rédaction de la contravention. Par exemple l'identité de l'agent 31, son matricule et son grade. Le terminal va à son tour fournir un ensemble d'information comme par exemple la date et l'heure.

Ces informations viennent enrichir le corps de la contravention 41. Dans un autre mode de réalisation, la matrice de contravention peu contenir un ensemble d'informations, comme par exemple la liste exhaustive des agents en activité. Dès lors, la carte professionnelle peut alors avoir comme objectif de supprimer du corps de la contravention les identifiants des agents autre que l'agent 31 actuellement en train de rédiger la contravention. Cette suppression est un mode de réalisation important car il permet, dans certains contextes particuliers, de partager les responsabilités entre la carte qui va retirer certaine information, et le fournisseur du contenu du document, qui aura fourni la liste exhaustive. Ainsi, si la carte avait un fonctionnement erratique, elle ne pourrait pas remplir le document de manière complètement incohérent, car son rôle est limite par la liste d'informations prévues.

L'agent va alors pouvoir saisir la plaque d'immatriculation 43 de la voiture 33 en infraction. Dans un mode plus élaboré de mise en oeuvre » de l'invention, l'identité du véhicule peut être fournie par exemple par un dispositif électronique de type puce sans contact, ce qui permettrait d'obtenir directement un certificat de sécurité lié au véhicule.

Une fois les données de la plaque d'immatriculation 43 saisies sur le terminal, celui-ci entre en contact 44 avec un serveur gouvernemental 34 distant. Cette communication se fait de préférence que travers d'un réseau de téléphonie mobile. En fournissant les informations de la plaque d'immatriculation, le serveur retrouve les données officielles 43b d'enregistrement du véhicule dans le pays (la carte grise en France), et par la même identifie le propriétaire 35b légitime du véhicules. Dans un mode de réalisation, le serveur fournit les données 36 nécessaires à la rédaction de la contravention au terminal qui complète le document. Ces documents sont par exemple les données techniques de la voiture (puissance ...), ainsi que l'identité du propriétaire, son état civil, ses coordonnées, ainsi que par exemple ses coordonnées fiscales.

A ce moment là, le document 45 ainsi complété est envoyé à la carte électronique 40 de l'agent 31, qui établie une signature 46 du document, et l'appose sur le document.

Le document 47 est alors transmis au serveur gouvernemental 34 qui le signe à son tour avec les données cryptographiques associées au véhicule, et encore une fois avec les données associées au propriétaire.

Le doucement ainsi établi est alors imprimé 48 par le terminal de l'agent, et apposé sur le véhicule. Dans le même temps, une version électronique est transmise au propriétaire sur son adresse électronique, et une version au centre fiscal dont dépend le contrevenant.

Le contrevenant peut alors traiter l'amende soit de manière électronique, soit par la voix postale comme auparavant.

La contravention établie ne peut être contestée, car l'identité de l'agent est prouvée lors de son établissement, l'identification du véhicule à été confirmée, et le propriétaire également.

Dans le cas ou le contrevenant est présent, l'établissement de la contravention peut se faire de manière plus simple, en réduisant les échanges avec le serveur gouvernemental, voire même de manière non connectée.

La présente invention s'applique avantageusement à des documents d'identité totalement ou partiellement électroniques.

Des documents totalement électroniques peuvent être par exemple des dispositifs électroniques dédiés de type clefs USB (pour Universal Serial Bus).

Des documents partiellement électroniques peuvent être par exemple des mémoires électroniques qui contiennent de manière sécurisées des informations, et qui doivent être associées à un dispositif électronique pour devenir utilisable. Par exemple de tels documents peuvent avoir la forme de carte mémoire, par exemple MMC (pour MultiMediaCard), SD (pour Secure Digital card), ou CompactFlash. Dans ces modes particuliers d'implémentation, le document d'identité au sens de la présente invention est composé de ces composants électroniques, et d'un support quelconque. Ainsi l'utilisation successive d'un tel composant associé à des dispositifs hôtes différents est considérée comme l'usage d'un seul et même document électronique au sens de la présente invention.

La présente invention s'applique également à des documents d'identité dématérialisés. Ces documents d'identité dématérialisés peuvent par exemple prendre la forme d'une application logicielle qui serait embarquée dans un dispositif électronique hôte fournissant les fonctionnalités de communication et de calcul requises.

Ainsi, par exemple une application « carte d'identité » embarquée dans un téléphone portable forme un document d'identité selon l'invention.

## Revendications

1. Procédé d'établissement sécurisé d'un contrat numérique entre, au moins un premier dispositif électronique communicant, un deuxième dispositif électronique communicant et un tiers de confiance, lesdits premiers et deuxièmes dispositif électronique communicant possédant chacun au moins un couple clef privée clef publique, et un certificat d'authenticité au regard d'un algorithme asymétrique ASYM, ledit tiers de confiance possédant tout ou partie des informations publiques desdits dispositifs électroniques communicants, **Caractérisé en ce qu**'il comprend au moins les étapes de :
- signature, dans laquelle ledit premier dispositif électronique communicant signe, au moyens de sa clef privée et dudit algorithme asymétrique ASYM, tout ou partie d'un document numérique, et ajoute cette signature audit document numérique dans un format lisible optiquement, pour produire un document signé
- contre-signature, dans lequel ledit deuxième dispositif électronique communicant signe, au moyens de sa clef privée et dudit algorithme asymétrique ASYM, tout ou partie dudit document signé, et ajoute cette signature audit document signé dans un format lisible optiquement, pour produire un document contresigné
- édition, formatage dudit document contresigné dans un format imprimable assurant la lisibilité optique du contenu dudit document, ainsi que desdits deux signatures électroniques, indépendamment les uns des autres.

2. Procédé selon la revendication 1 **caractérisé en ce que,** au cours de l'étape de signature, ledit premier dispositif électronique communicant calcule une valeur de sécurité, et l'ajoute audit document électronique, avant de le signer.

3. Procédé selon la revendication 1 **caractérisé en ce que**, au cours de l'étape de contre-signature, ledit deuxième dispositif électronique communicant calcule une valeur de sécurité, et l'ajoute audit document signé, avant de le signer.

4. Procédé selon l'une des revendications 2 ou 3, **caractérisé en ce que** ladite valeur de sécurité est un nombre aléatoire.

5. Procédé selon l'une des revendications 2 ou 3, **caractérisé en ce que** ladite valeur de sécurité est fonction de la date.

6. Procédé selon la revendication 2 **caractérisé en ce que,** préalablement à la signature dudit document numérique, ledit premier dispositif électronique communicant transmet tout ou partie des composantes publiques de son identité audit tiers de confiance, qui vérifie cette identité et retourne une information qui entre dans le calcul de ladite valeur de sécurité.

7. Procédé selon la revendication 3 **caractérisé en ce que**, préalablement à la contresignature dudit document signé, ledit second dispositif électronique communicant transmet tout ou partie des composantes publiques de son identité audit tiers de confiance, qui vérifie cette identité et retourne une information qui entre dans le calcul de ladite valeur de sécurité.

8. Procédé selon l'une quelconque des revendications 1 à 7, **caractérisé en ce que**, au cours de l'étape de signature, ledit premier dispositif électronique communicant modifie ledit document électronique

9. Procédé selon la revendication 8 **caractérisé en ce que** ladite modification consiste en l'insertion, dans ledit document électronique, d'information contenues dans ledit premier dispositif électronique

10. Procédé selon la revendication 8 **caractérisé en ce que** ladite modification consiste en une suppression, dans ledit document électronique, de une ou plusieurs informations originales, en fonction d'information contenues dans ledit premier dispositif électronique.

11. Procédé selon l'une quelconque des revendications 1 à 7, **caractérisé en ce que**, au cours de l'étape de contresignature, ledit deuxième dispositif électronique communicant modifie ledit document signé

12. Procédé selon la revendication 8 **caractérisé en ce que** ladite modification consiste en l'insertion, dans ledit document signé, d'information contenues dans ledit deuxième dispositif électronique

13. Procédé selon la revendication 8 **caractérisé en ce que** ladite modification consiste en une suppression, dans ledit document signé, de une ou plusieurs informations originales, en fonction d'information contenues dans ledit deuxième dispositif électronique.

14. Procédé selon l'une quelconque des revendications 1 à 13 **caractérisé en ce que,** sur ledit document au format imprimable, lesdites signatures électroniques sont inscrites sous forme numérique.

15. Procédé selon l'une quelconque des revendications 1 à 13 **caractérisé en ce que,** sur ledit document au format imprimable, lesdites signatures électroniques sont inscrites sous la forme de code barres.

16. Procédé de traitement d'un contrat numérique entre, au moins un signataire, un contresignataire et un tiers de confiance, lesdits signataire et contresignataire possédant chacun au moins un couple clef privée clef publique, et un certificat d'authenticité au regard d'un algorithme asymétrique ASYM, ledit tiers de confiance possédant tout ou partie des informations publiques desdits signataire et contresignataire, et un dispositif électronique, dit receveur
**Caractérisé en ce qu**'il comprend au moins les étapes de :
- réception, au cours de laquelle ledit receveur obtient un document numérique signé et contresigné,
- authentification du signataire, au cours de laquelle ledit receveur lit la contresignature présente sur ledit document, contacte ledit tiers de confiance afin d'obtenir la clef publique du contresignataire, et vérifie la corrélation entre ladite contresignature et ladite clef publique en utilisant ledit algorithme asymétrique ASYM,
- authentification du contresignataire, au cours de laquelle ledit receveur lit la signature présente sur ledit document, contacte ledit tiers de confiance afin d'obtenir la clef publique du signataire, et vérifie la corrélation entre ladite contresignature et ladite clef publique en utilisant ledit algorithme asymétrique ASYM,
- traitement, au cours de laquelle le contenu dudit document numérique est analysé.
